# EUROPÄISCHE PATENTSCHRIFT

(11) **EP 1 507 605 B1**
(45) Veröffentlichungstag und Bekanntmachung des Hinweises auf die Patenterteilung: **21.12.2005**
(21) Anmeldenummer: 03732302.9
(22) Anmeldetag: 30.04.2003
(51) Int. Cl.: B21B 29/00

(54) **VORRICHTUNG ZUR GESTEUERTEN BEEINFLUSSUNG DER AUFLIEGEKRÄFTE VON ANDRUCKROLLEN**
DEVICE FOR INFLUENCING IN A CONTROLLED MANNER THE LOAD PRESSURE OF PRESSURE ROLLERS
DISPOSITIF POUR INFLUER, DE MANIERE COMMANDEE, SUR LES FORCES D'APPUI DE ROULEAUX PRESSEURS

(30) Priorität: 29.05.2002 DE 10223864; 30.12.2002 DE 10261758
(43) Veröffentlichungstag der Anmeldung: 23.02.2005
(73) Patentinhaber: SMS Demag AG, 40237 Düsseldorf (DE)
(72) Erfinder: SCHEFFE, Kurt, 57271 Hilchenbach (DE); KELLER, Karl, 57217 Hilchenbach (DE); KLEIN, Achim, 57223 Kreuztal (DE); BREUER, Michael, 57271 Hukchenbach (DE); SOHLER, Jörn, 57223 Kreuztal (DE)
(74) Vertreter: Valentin, Ekkehard
(86) Internationale Anmeldenummer: PCT/EP2003/004501
(87) Internationale Veröffentlichungsnummer: WO 2003/099478

(56) Entgegenhaltungen:
- DE-B- 1 281 981
- US-A- 3 171 305
- US-A- 3 717 021

## Beschreibung

Die Erfindung bezieht sich auf eine Vorrichtung zur gesteuerten Beeinflussung der Aufliegekräfte von Andruckrollen, insbesondere von auf Arbeitswalzen aufliegenden Stützwalzen.

Rollen dieser Art lagern mit ihren Zapfen in Gleit- oder Rollenlagern, die bei Stützwalzen von, in den Walzenständern geführten Lagereinbaustücken getragen werden. Einer oder beide Zapfen weist dabei einen Zapfenansatz auf der in einem Axial-Stützlager lagert, dessen Lagergehäuse an einem Traggehäuse bzw. Lagereinbaustück der Andruckrolle bzw. Stützwalze angesetzt ist.

In bekannten Mehr-Walzen-Gerüsten lagern die Stützwalzen und die Arbeitswalzen in Lagereinbaustücken, die in den Fenstern des Ständers der Walzgerüste geführt sind. Die Stützwalzen liegen dabei an, beabstandet, anstellbar gelagerten, den Walzspalt bildeten Arbeitswalzen an und der Walzspalt kann durch gesteuertes Biegen der Arbeitswalzen geändert und bestimmt werden.

Beim Walzen von Blechen, insbesondere solchen mit großer Breite, das die Verwendung von Stützwalzen großer Ballenlänge mit entsprechend hohem Gewicht erfordert, bedurften diese Stützwalzen einer Ausbalancierung über ihre Länge, damit die Wirkung der, auf die Arbeitswalzen wirkenden Biegekräfte zur Bildung des Walzspaltprofils möglichst wenig beeinträchtigt werden. Die Ausbalancierung der Stützwalzen muss dabei so erfolgen, dass der Kraftfluss zwischen Stützwalze und Arbeitswalze über die gesamte Berührungslänge beider Walzen während des Walzens ohne Unterbrechung (Klaffen) bestehen bleibt; dies insbesondere auch bei einem schnellen Anstieg bzw. einem entsprechenden schnellen Absinken der Walzkraft, wie dies z.B. beim Reversierbetrieb mit solchen Walzgerüsten der Fall ist. Die Lager erfahren durch die sich wiederholende Lastumkehr und die Leerlaufentlastung Beanspruchungen, die sich bei Verwendung von Rollenlagern auf deren Lagerrollen und auch, je nach der Lastverteilung auf einzelne dieser Rollen oder bei der Verwendung von Gleitlagern entsprechend auf deren Lagerflächen auswirken und zu Beschädigungen führen können.

Bei großen breiten Walzgerüsten kommt hinzu, dass die Stützwalzen mit den entsprechend großen Achslängen Eigengewichte erreichen, die größer sind, als dies zur Erzeugung nötiger Kontaktkräfte zwischen den Walzen erforderlich wäre, mit der Folge, dass in diesem Fall die Biegekräfte für die Arbeitswalzenbiegung größer eingestellt werden müssen als eigentlich notwendig mit der Folge, dass ein Teil der für die Beeinflussung des Walzspaltprofils bestimmten Biegekräfte nicht wirksam ausgenutzt werden kann.

Diese Schwankungen der Walzkräfte die beim Walzprozeß bereits während des Stiches auftreten erfordern deshalb schnelle und präzise Einsteuerungen der Ausbalancierung der Stützwalzen.

Den beschriebenen Schwierigkeiten ähnliche Probleme ergeben sich beim Bearbeitungsbetrieb von Walzband bei den, dabei verwendeten Rollen von Band-Treibrollenpaaren. Die Umfangsfläche der auf der Bandoberfläche liegenden und der darunter liegenden Rolle erfährt häufig Beschädigungen weil die aufliegende obere Rolle nach Durchlauf des Bandendes eine ruckartige Fallbewegung in Richtung auf die untere Rolle ausführt.

Es wurde bereits vorgeschlagen, die Ausbalancierung von Stützwalzen durch Aufbringen von Biegekräften auf einen, entsprechend ausgebildeten Zapfen der Walze zu bewirken und den nach oben wirkenden Teil dieser Kräfte mit einem oberhalb der Walze, parallel zu dieser angeordneten Haltebalken abzufangen. Diese Anordnung baut aber sehr hoch und erfordert entsprechend hohe Ständer und Ständerfenster. Dies führt zu vergleichsweise hohen und schweren Gerüsten und erfordert darüber hinaus eine seitliche axiale Verlängerung der Stützwalze selbst.

Der Erfindung liegt die Aufgabe zugrunde, eine Vorrichtung zu schaffen, die es erlaubt, den oben erläuterten Schwierigkeiten zu begegnen. Sie schlägt dazu vor, ausgehend von bekannten Ausbildungen (DE-B 1 281 981), bei denen die Zapfen von Stützwalzen, die in den Lagereinbaustücken von Walzgerüsten oder entsprechenden Lagertraggehäusen lagern, durch die Kolbenstangen von, au-βenseitig an Walzenständern angeordnete Kolbenzylinder-Aggregate beaufschlagt werden, einen in das Lagergehäuse eingesetztes, das axiale Stützlager zylindrisch umschließendes Zwischengehäuse vorzusehen, das von einem Kolbenzylinder-Aggregat beaufschlagt, in dem Lagergehäuse radial zur Achse des Zapfenansatzes verstellverschiebbar ist und mit dieser Anordnung durch gesteuerte Stellverschiebungen des Zwischengehäuses und damit des, in diesem lagernden Zapfenansatzes Biegekräfte in die Stützwalze einzubringen.

Das Kolbenzylinder-Aggregat kann wie die Erfindung weiter vorsieht aus einer innenseitigen, achsradialen Zylinderausnehmung in der, das Zwischengehäuse umschließenden Wandung des Lagergehäuses und einem, druckmittelbaufschlagbar in dieser zylindrischen Ausnehmung verschiebbaren, schwimmenden Kolben bestehen. Bei einer Ausbildung der Vorrichtung mit einem, in einem Gleitlager, im Lagereinbaustück einer Stützwalze lagernden Zapfen kann das Gleitlager als hydrodynamisches Ölfilmlager (Morgoil-Lager) ausgebildet sein.

Mit der beschriebenen Vorrichtung, die ohne Schwierigkeiten und ohne großen technischen Aufwand auch in vorhandene Lagerungen von Stützwalzen oder Andruckrollen einbaubar ist, lassen sich die, auf Stützwalzen oder Andruckrollen aufzubringenden Kräfte mit Hilfe der baulich sehr einfachen Kolbenzylinderanordnung und handelsüblichen Druckmittelsteuereinrichtungen in einfacher Weise regeln.

Die Erfindung wird anhand der, in der Zeichnung dargestellten Ausführungsbeispiele erläutert. Die Zeichnung zeigt in
- Figur 1: einen Walzenzapfen mit seiner Lagerung im Radial-Schnitt und
- Figur 2: den Walzenzapfen einer Stützwalze mit einer anders ausgebildeten Lagerung im Radial-Schnitt.

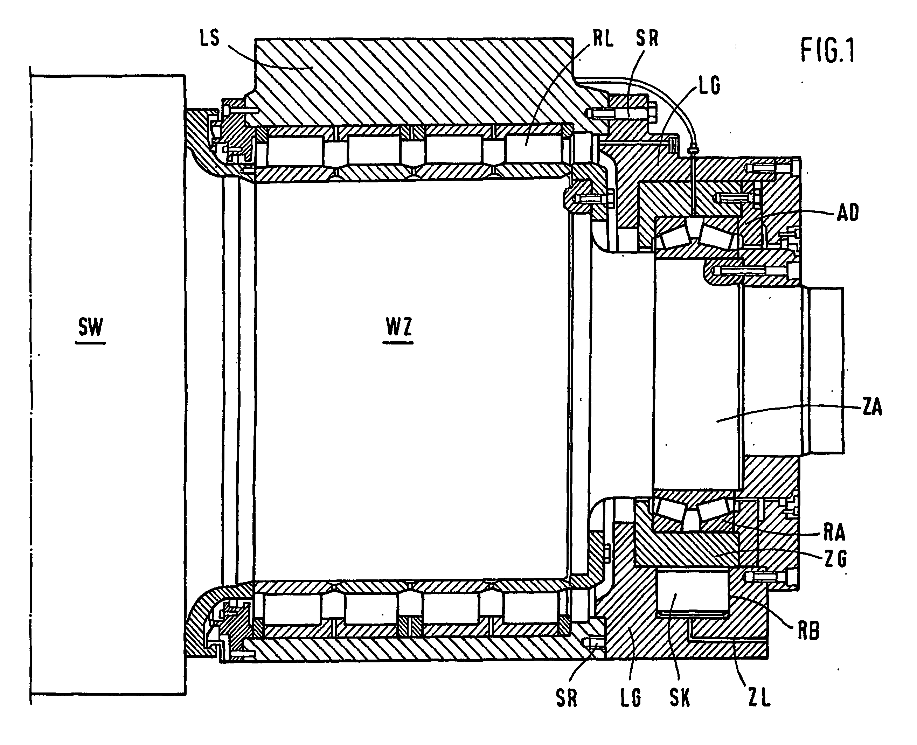

Wie aus Figur 1 zu ersehen, weist der mit einem Rollenlager RL in dem Lagereinbaustück LS gelagerte Walzenzapfen WZ der Stützwalze SW einen Zapfenansatz ZA auf, der in einem axialem Stützlager in Form eines Radiax-Lagers RA lagert. Dieses Radiax-Lager RA wird ringförmig von einem zylindrischen Zwischengehäuse ZG umschlossen, das mit radialem Spiel in eine zylindrische Ausnehmung des, an das Lagereinbaustück LS angesetzten und durch Schrauben SR mit diesem verbundenen Lagergehäuses LG eingesetzt ist. Das Zwischengehäuse ZG ist auf der, dem Walzenzapfen WZ abgewandten Seite mit einer Abdeckung AD verschlossen. In der, das Zwischengehäuse ZG umschließenden Wandung des Lagergehäuses LG ist in einer achsradialen Bohrung RB ein schwimmender Kolben SK angeordnet. In die achsradiale Bohrung RB mündet, unterhalb des schwimmenden Kolbens SK die Druckmittelzuführleitung ZL eines (nicht dargestellten) gesteuerten Druckmittelerzeugers.

Mit Hilfe des, über die Zuführleitung ZL in die Radialbohrung RB eingeleiteten Druckmittels, das die Unterseite des Kolbens SK beaufschlagt, kann das Zwischengehäuse ZB und mit diesem der Zapfenansatz ZA um ein vorgegebenes Maß nach oben gedrückt und damit unter Ausbiegung der Mittelachse der Stützwalze SW eine entsprechende Veränderung der Stützfläche des Fallens dieser Stützwalze gegenüber der (nicht dargestellten) Arbeitswalze erzielt werden.

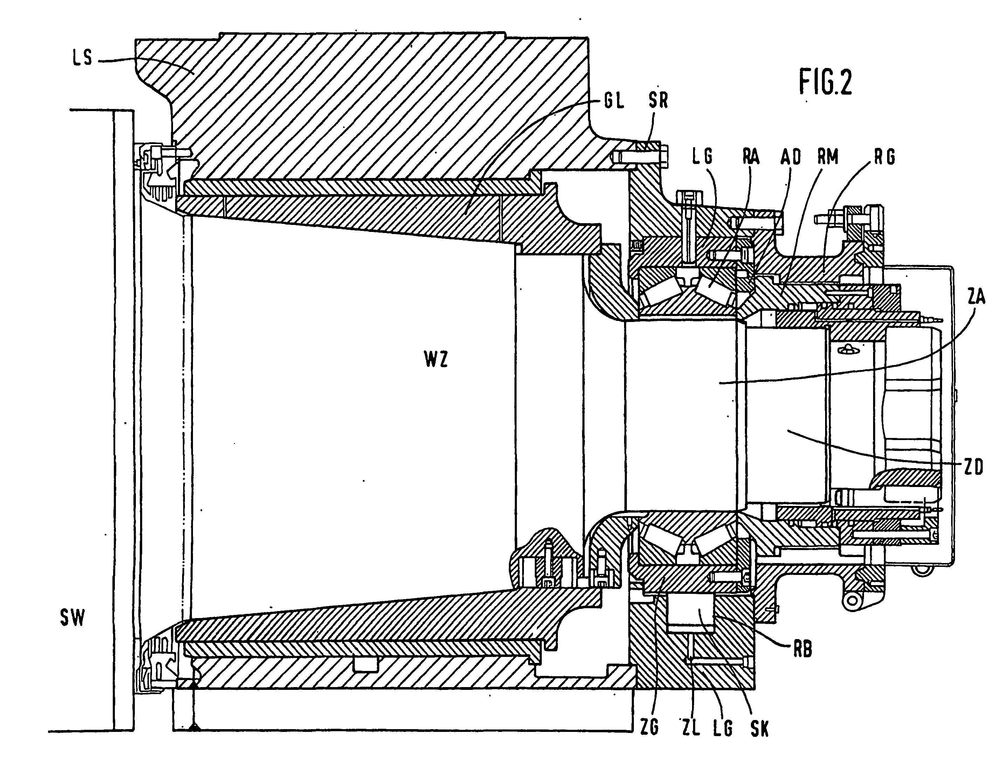

Aus Figur 2 geht eine, der Darstellung nach Figur 1 entsprechende Anordnung hervor, bei der auf den Zapfen WZ der Stützwalze SW ein Gleitlager GL in der Ausbildung eines Ölfilmlagers aufgeschoben ist. Über die Abdeckung AD ist hier an das Lagergehäuse LG auf einen weiteren, an den Zapfenansatz ZA angesetzten Zapfenansatz ZD ein Ringgehäuse RG aufgeschoben und mit dem Lagergehäuse LG verbunden. Dieses Ringgehäuse trägt eine Ringdichtungsmanschette RM für das Ölfilmlager.

### Bezugszeichenverzeichnis

- RL: Rollenlager
- GL: Gleitlager
- LS: Lagereinbaustück
- WZ: Walzenzapfen
- SW: Stützwalze
- ZA: Zapfenansatz
- ZD: (weiterer) Zapfenansatz
- RA: Radiaxlager
- LG: Lagergehäuse
- ZG: Zwischengehäuse
- SR: Schraube
- AD: Abdeckung
- RB: (achsradiale) Bohrung
- SK: (schwimmender) Kolben
- ZL: (Druckmittel) Zuführleitung
- RG: Ringgehäuse
- RM: Ringdichtungsmanschette

## Patentansprüche

1. Vorrichtung zur gesteuerten Beeinflussung der Aufliegestützkräfte von Andruckrollen, insbesondere von, auf Arbeitswalzen aufliegenden Stützwalzen (SW), deren, in einem Lagertraggehäuse bzw. dem Lagereinbaustück der Walzen eines Walzgerüstes in Rollen- oder Gleitlagern lagernde Zapfen (WZ) einen Zapfenansatz (ZA) aufweisen, der in einem Axial-Stützlager lagert, dessen Lagergehäuse (LG) außenseitig an das Lagertraggehäuse der Andruckrollen bzw. Lagereinbaustück der Stützwalzen (LS) angesetzt ist,
**gekennzeichnet durch,**
ein, in das Lagergehäuse (LG) eingesetztes, das Axial-Stützlager zylindrisches umschließendes Zwischengehäuse (ZG), das von einem Kolbenzylinder-Aggregat (RB, SK) beaufschlagt, in dem Lagergehäuse radial zur Achse des Zapfenansatzes (ZA) stellverschiebbar ist.

2. Vorrichtung nach Anspruch 1,
**dadurch gekennzeichnet,**
**dass** das Kolbenzylinder-Aggregat (RB, SK) aus einer innenseitigen achsradialen zylindrischen Ausnehmung (RB) in der das Zwischengehäuse (ZG) umschließenden Wandung des Lagergehäuses (LG) und einem, druckmittelbeaufschlagbar in dieser zylindrischen Ausnehmung (RB) verschiebbaren schwimmenden Kolben (SK) besteht.

3. Vorrichtung nach Anspruch 1 oder 2 mit, in einem Gleitlager im Lagereinbaustück lagernden Zapfen von Stützwalzen,
**dadurch gekennzeichnet,**
**dass** das Gleitlager als hydraulisches Ölfilmlager (Morgoil) ausgebildet ist.

## Claims

1. Device for controlled influencing of supporting forces of presser rollers, particularly of backing rolls (SW), which rest on working rolls and the pins (WZ) - which are mounted in roller or slide bearings in a bearing carrier housing or the bearing chock of the rolls of a roll stand - of which have a pin extension (ZA) mounted in an axial support bearing, the bearing housing (LG) of which is placed at the outer side against the bearing carrier housing of the presser rollers or bearing chock of the backing rolls (LS), **characterised by** an intermediate housing (ZG), which is inserted into the bearing housing (LG) and cylindrically encloses the axial support bearing and which is acted on by a piston-cylinder unit (RB, SK) to be displaceable in setting in the bearing housing radially relative to the axis of the pin extension (ZA).

2. Device according to claim 1, **characterised in that** the piston-cylinder unit (RB, SK) consists of an axial/radial cylindrical recess (RB), which is at the inner side, in the wall, which encloses the intermediate housing (ZG), of the bearing housing (LG) and a floating piston (SK) loadable by a pressure medium to be displaceable in this cylindrical recess (RB).

3. Device according to claim 1 or 2, with pins, which are mounted in a slide bearing in the bearing chock, of backing rolls, **characterised in that** the slide bearing is formed as a hydraulic oil film bearing (Morgoil).

## Revendications

1. Dispositif pour influer de façon commandée sur les forces d'appui de rouleaux presseurs, en particulier de cylindres de soutien (SW) reposant sur des cylindres de travail, dont les tourillons (WZ) montés dans des paliers à rouleaux ou à coulissement dans un boîtier porteur de palier et dans l'insert de montage des cylindres d'une cage de laminoir comprennent un talon de tourillon (ZA) qui est monté dans un palier de soutien axial dont le boîtier de palier (LG) est rapporté du côté extérieur sur le boîtier porteur de palier des rouleaux presseurs ou de l'insert de montage des cylindres de soutien (LS),
**caractérisé en ce que**
un boîtier intermédiaire (ZG) intégré dans le boîtier de palier (LG), entourant en forme cylindrique le palier de soutien axial et alimenté par une unité à piston-et-cylindre (RB, SK) est mobile en translation réglée dans le boîtier de palier radialement à l'axe du talon de tourillon (ZA).

2. Dispositif selon la revendication 1,
**caractérisé en ce que**
l'unité à piston-et-cylindre (RB, SK) est constituée par un évidement intérieur cylindrique (RB) radial à l'axe dans la paroi du boîtier de palier (LG) entourant le boîtier intermédiaire (ZG), et par un piston en flottement (SK) susceptible d'être alimenté en fluide sous pression et mobile en translation dans cet évidement cylindrique (RB).

3. Dispositif selon l'une ou l'autre des revendications 1 et 2, comportant un tourillon de cylindres de soutien monté dans un palier à coulissement dans l'insert de montage,
**caractérisé en ce que**
le palier à coulissement est réalisé sous forme de palier hydraulique à film d'huile (morgoil).
